(19)

**Europäisches Patentamt**
**European Patent Office**
**Office européen des brevets**

(11) **EP 4 270 292 A1**

(12) **EUROPEAN PATENT APPLICATION**

(43) Date of publication:
**01.11.2023 Bulletin 2023/44**

(21) Application number: **23169550.3**

(22) Date of filing: **24.04.2023**

(51) International Patent Classification (IPC):
**G06Q 30/0251** (2023.01)    **G06Q 30/0601** (2023.01)
**G06Q 10/087** (2023.01)

(52) Cooperative Patent Classification (CPC):
**G06Q 30/0631; G06Q 30/0271;** G06Q 10/087

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **29.04.2022  TW 111116525**

(71) Applicant: **Gamamobi Taiwan Co., Ltd
105609 Taipei City (TW)**

(72) Inventor: **LIAO, Yi Ping
105609 TAIPEI CITY (TW)**

(74) Representative: **MERH-IP Matias Erny Reichl
Hoffmann
Patentanwälte PartG mbB
Paul-Heyse-Strasse 29
80336 München (DE)**

(54)    **METHOD FOR RECOMMENDING COMMODITIES AND THE RELATED ELECTRONIC DEVICE**

(57)    The present disclosure provides a method for recommending a commodity and a related electronic device. The present disclosure provides an electronic device for processing a commodity recommendation list. The electronic device includes a communication module, a memory module and a processing module. The communication module is configured to perform: receiving a current state of a user; receiving at least one previous order of the user; receiving at least one browse record of the user; and transmitting a first signal in response to a matching score of the commodity being greater than or equal to a first predetermined proportion of a user attribute score, where the first signal indicates that the commodity is added into a commodity recommendation list of the user. The processing module is configured to perform: determining, based on the current state of the user, a first set of user attributes; determining, based on the at least one previous order of the user, a second set of user attributes; determining, based on the at least one browse record of the user, a third set of user attributes; determining, based on the first set of user attributes, the second set of user attributes and the third set of user attributes, the user attribute score; and determining, based on the first set of user attributes, the second set of user attributes and the third set of user attributes and a first set of commodity attributes of the commodity, the matching score of the commodity.

FIG. 1

EP 4 270 292 A1

**Description**

**BACKGROUND OF THE INVENTION**

**1. Field of the Invention**

The present disclosure relates to a method for recommending a commodity and a related electronic device. More specifically, the present disclosure relates to a method for recommending a commodity based on a matching degree between a user and the commodity, and a related electronic device.

**2. Description of the Related Art**

Due to booming rise of on-line shopping and auction platforms, huge on-line shopping opportunities have been brought. How to recommend relevant commodities that can attract consumers' attention based on their needs or preferences can effectively increase the likelihood of consumers purchasing commodities, thereby facilitating transactions.

**SUMMARY OF THE INVENTION**

A recommendation method for a commodity may be to find out a popular hot commodity in manner of counting sales volume or click-through rate, and recommend the popular hot commodity to every consumer. Or a special or lowest priced commodity can be recommended to the consumers, thereby attracting the consumers to buy it. These practices may lead to relatively lowering an exposure rate and purchase opportunity for other relatively unpopular commodities, and lead to a consumption phenomenon where the popular commodities are constantly hot sold while nobody knows the unpopular commodities.

In some other recommendation methods, personalized commodity recommendations are provided based on users' consumption habits, satisfaction or score feedback mechanisms in a data mining manner. However, this recommendation method needs to rely on a large number of user consumption records.

However, most commodity recommendation methods do not consider the relevance of commodity attributes. For example, the similarity or relevance of commodity design styles or specifications may be one of important consideration factors prior to a purchasing behavior of the consumer.

The present disclosure provides a novel commodity recommendation method and a related electronic device. The present disclosure provides a commodity attribute and user attribute oriented commodity recommendation method and a related electronic device.

In some embodiments, the present disclosure includes an electronic device for processing a commodity recommendation list. The electronic device includes a communication module, a memory module and a processing module. The communication module is configured to be communicatively coupled to a user device of a user, and a database. The communication module is configured to: receive a current state of the user; receive at least one previous order of the user; receive at least one browse record of the user; and transmit a first signal in response to a matching score of a commodity being greater than or equal to a first predetermined proportion of a user attribute score, where the first signal indicates that the commodity is added into a commodity recommendation list of the user. The memory module is configured to store multiple instructions and information. The processing module is configured to be coupled to the communication module and the memory module and perform, based on the instructions and information stored in the memory module, the following operations of: determining, based on the current state of the user, a first set of user attributes; determining, based on the at least one previous order of the user, a second set of user attributes; determining, based on the at least one browse record of the user, a third set of user attributes; determining, based on the first set of user attributes, the second set of user attributes, and the third set of user attributes, the user attribute score; and determining, based on the first set of user attributes, the second set of user attributes, the third set of user attributes and a first set of commodity attributes of the commodity, the matching score of the commodity.

In some embodiments, the present disclosure includes a method for recommending a commodity. The method includes: receiving a current state of a user; and determining, based on the current state of the user, a first set of user attributes; receiving at least one previous order of the user; determining, based on the at least one previous order of the user, a second set of user attributes; receiving at least one browse record of the user; determining, based on the at least one browse record of the user, a third set of user attributes; determining, based on the first set of user attributes, the second set of user attributes, and the third set of user attributes, a user attribute score; determining, based on the first set of user attributes, the second set of user attributes, the third set of user attributes, and a first set of commodity attributes of a commodity, a matching score of the commodity; and adding, in response to the matching score of the commodity being greater than or equal to the first predetermined proportion of the user attribute score, the commodity into a recommendation list of the user.

## BRIEF DESCRIPTION OF THE DRAWINGS

FIG. 1 illustrates a system and a device according to some embodiments of the present disclosure.

FIG. 2 illustrates a flowchart of a method according to some embodiments of the present disclosure.

FIGS. 3A and 3B illustrate a schematic diagram of a calculation method of a user attribute score and a matching score according to some embodiments of the present disclosure.

FIGS. 4A to 4C illustrate a calculation method of a user attribute score and a matching score according to some embodiments of the present disclosure.

FIG. 5 illustrates a schematic diagram of a calculation method of a user attribute score and a matching score according to some embodiments of the present disclosure.

FIGS. 6A and 6B illustrate a schematic diagram of a calculation method of a user attribute score and a matching score according to some embodiments of the present disclosure.

In order to better understand the aforementioned patterns and their additional patterns and embodiments disclosed in the present disclosure, the following embodiments should be referenced in conjunction with the above drawings. In each drawing, similar reference symbols indicate similar elements. It should be noted that various features may not be drawn to scale. In fact, for the purpose of clear description, sizes of various features can be arbitrarily increased or decreased.

## PREFERRED EMBODIMENT OF THE PRESENT INVENTION

The method, system, and other patterns of the present disclosure are described. Reference will be made to certain embodiments of the present disclosure, examples of which are depicted in the accompanying drawings. Although the present disclosure will be described in conjunction with embodiments, it will be understood that it is not intended to limit the present disclosure to such particular embodiments. On the contrary, the present disclosure is intended to cover alternatives, modifications and equivalents within the spirit and scope of the present disclosure. Therefore, the description and the drawing should be viewed in a descriptive sense rather than a restrictive sense.

Furthermore, in the following description, numerous specific details are set forth to provide a thorough understanding of the present disclosure. However, those generally skilled in this technology will be able to practice the present disclosure without the need for such particular details. In other cases, in order to avoid confusion about the pattern of the present disclosure, methods, procedures, operations, components and networks that are already familiar to those generally skilled in this technology are not described in detail.

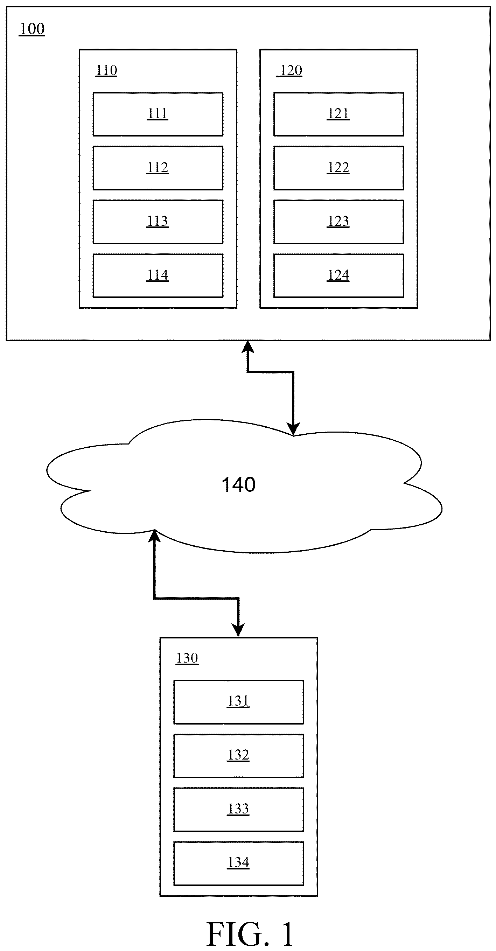

FIG. 1 illustrates a system 100 and a user device 130 according to some embodiments of the present disclosure. The system 100 may include a server 110 and a database 120. In some embodiments, the server 110 can be provided in a company that provides on-line shopping, a company that provides commodity management, or other companies that provide related services. The database 120 can be provided in the company that provides the on-line shopping, the company that provides the commodity management, or the other companies that provide the related services. The database 120 can be configured to store user data and commodity data.

The server 110 may include an input/output module 111, a memory module 112, a processing module 113 and a communication module 114. The database 120 may include an input/output module 121, a memory module 122, a processing module 123 and a communication module 124. The user device 130 may include an input/output module 131, a memory module 132, a processing module 133 and a communication module 134.

The server 110 may be a workstation or computer. The database 120 may be a workstation or computer. In some embodiments, the database 120 can be integrated into the server 110. The user device 130 may be a computer, a personal digital assistant, a smart phone or a tablet computer.

The server 110 and the database 120 can be communicatively coupled to each other via the communication module 114 of the server 110 and the communication module 124 of the database 120. The server 110 and the database 120 can be communicatively coupled to each other by a wired method, such as via an Ethernet route, a coaxial cable, a universal serial bus (USB), or other lines with a communication function. The server 110 and the database 120 can be communicatively coupled to each other by a wireless method, such as via bluetooth, IEEE 802.11, LTE, 5G, or other wireless communication protocols.

In some embodiments, the server 110 and the database 120 can be provided in different geographical positions. The server 110 can be communicatively coupled to the Internet via the communication module 114 of the server 110. The server 110 can be communicatively coupled to the Internet by the wired method (such as via the Ethernet route, the coaxial cable, or the other lines with the communication function), or by the wireless method (such as via bluetooth, IEEE 802.11, LTE, 5G, or the other wireless communication protocols). The database 120 can be communicatively coupled to the Internet via the communication module 124 of the database 120. The database 120 can also be communicatively coupled to the Internet by the wired method (such as via the Ethernet route, the coaxial cable, or the other lines with the communication function), or by the wireless method (such as via bluetooth, IEEE 802.11, LTE, 5G, or the other wireless communication protocols). The server 110 and the database 120 can be communicatively coupled to each other via the Internet.

Via the communication module 134 of the user device 130, the system 100 and the user device 130 can be communicatively coupled to each other by the wireless method, such as bluetooth, IEEE 802.11, LTE, 5G, or the other wireless communication protocols. In some embodiments, via the communication module 134 of the user device 130, the system 100 and the user device 130 can be communicatively coupled to each other by the wired method, such as the Ethernet route, the coaxial cable, the USB, or the other lines with the communication function. The system 100 can be communicatively coupled to the user device 130 via the communication module 114 of the server 110. In some embodiments, the system 100 can be communicatively coupled to the user device 130 via an additional communication module.

In some embodiments, the system 100 can be communicatively coupled to the Internet 140 by the wired method (such as via the Ethernet route, the coaxial cable, or the other lines with the communication function), or by the wireless method (such as via bluetooth, IEEE 802.11, LTE, 5G, or the other wireless communication protocols). The user device 130 can be communicatively coupled to the Internet via the communication module 134 of the user device 130. The user device 130 can also be communicatively coupled to the Internet by the wired method (such as via the Ethernet route, the coaxial cable, or the other lines with the communication function), or by the wireless method (such as via bluetooth, IEEE 802.11, LTE, 5G, or the other wireless communication protocols). The system 100 and the user device 130 can be communicatively coupled to each other via the Internet.

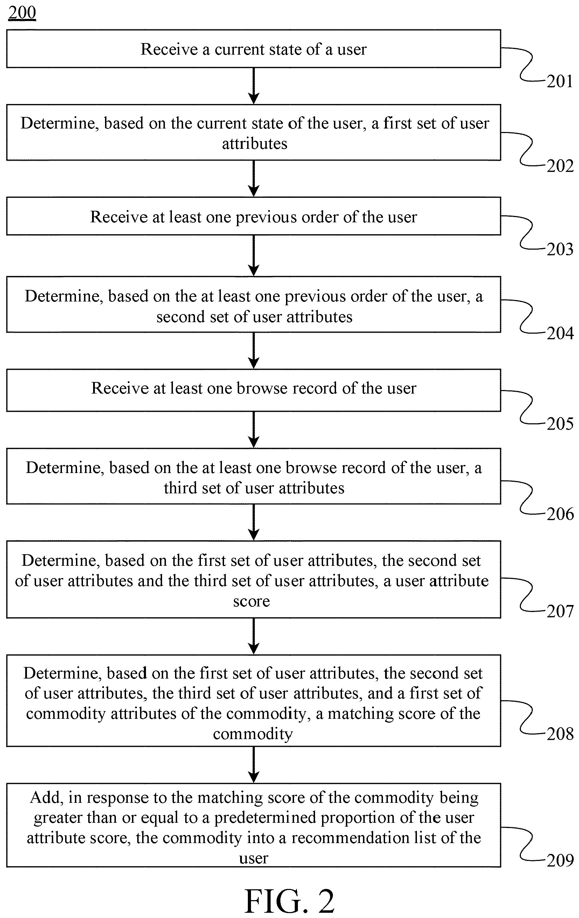

The input/output module 111, memory module 112, processing module 113 and communication module 114 of the server 110 can be configured to perform operations described below and in FIGS. 2 to 6B. The input/output module 121, memory module 122, processing module 123 and communication module 124 of the database 120 can be configured to perform operations described below and in FIGS. 2 to 6B. In some embodiments, the system 100 can perform operations described below and in FIGS. 2 to 6B with an additional output module, memory module, processing module and communication module.

FIG. 2 illustrates a flowchart of a procedure 200 according to some embodiments of the present disclosure. Each operation of the procedure 200 may be performed by the system 100 shown in FIG. 1. Each operation of the procedure 200 may be performed by the server 110 in the system 100 shown in FIG. 1. Each operation of the procedure 200 may be operated together by the server 110 and the database 120 in the system 100 shown in FIG. 1. Each operation of the procedure 200 can be operated together by the system 100 shown in FIG. 1 in collaboration with the user device 130.

The procedure 200 may include an operation 201. The operation 201 includes receiving the current state of the user. The user can input the current state of the user by the user device 130. The user can input a current activity, current mood, current location, or other current states of the user into the user device 130. The current state of the user can be received from the user device 130 or database 120 via a corresponding communication module. The current location of the user can be determined by the location of the user device 130. The current activity of the user can be determined based on the location of the user device 130 and nearby activities. The current activity or current mood of the user can be determined based on the location of the user device 130 and latest social software posting records. The communication module 114 of the server 110 can be configured to perform the operation 201. In some embodiments, the operation 201 can be performed in response to the user device 130 opening a related program (such as a shopping platform program or a browsable shopping platform program).

The procedure 200 may include an operation 202. The operation 202 includes determining, based on the current state of the user, a first set of user attributes. The first set of user attributes is determined based on the current activity, current mood, current location or other current states of the user via a corresponding processing module. For example, if the current location of the user is "Apple Commodity Regie Store", it can be determined that the first set of user attributes includes Apple related attributes, such as an attribute "of Brand is Apple" or an attribute of "Applicable to Apple". For example, if the current activity of the user is "Celebrating Birthday," it can be determined that the first set of user attributes includes birthday related attributes, such as an attribute "of Birthday Cake" or an attribute "of Birthday Gift". For example, if the current mood is "stress", it can be determined that the first set of user attributes includes stress relief related attributes, such as an attribute of "stress relief'.

The procedure 200 may include an operation 203. The operation 203 includes receiving at least one previous order from the user. One or more previous orders of the user can be received from the database 120 via a corresponding communication module. The operation 203 may further include inspecting commodities in the previous order, as well as related commodity attributes of the commodities.

The procedure 200 may include an operation 204. The operation 204 includes determining, based on the at least one previous order of the user, a second set of user attributes. The one or more previous orders of the user received from the database 120 may include one or more purchased commodities therein. The second set of user attributes can be determined based on the purchased commodities in the previous order of the user via a corresponding processing module. For example, if the purchased commodities in the previous order of the user include a Sony phone, the second set of user attributes may include an attribute of "Brand is Sony" or an attribute of "Applicable to Sony". If the purchased commodities in the previous order of the user include a commodity of MUJI, the second set of user attributes may include an attribute of "minimalist style".

The procedure 200 may include an operation 205. The operation 205 includes receiving at least one browse record of the user. One or more browse records of the user can be received based on temporary storage records of a server side. The one or more browse records of the user may be received from the database 120 via a corresponding communication module. The operation 206 may further include inspecting commodities in the browse record and relevant commodity attributes of the commodities.

The procedure 200 may include an operation 206. The operation 206 includes determining, based on at least one browse record of the user, a third set of user attributes. One or more browse records may include one or more clicked or browsed commodities. A third set of user attributes can be determined based on the clicked or browsed commodities in the browse record of the user via a corresponding processing module. For example, if the clicked or browsed commodities in the browse record of the user include a flannel shirt, the third set of user attributes may include an attribute of "Flannel" or an attribute of "Casual Shirt". If the purchased commodities in the previous order of the user include a knitted vest, the second set of user attributes may include an attribute of "Academic Style" or an attribute of "Wool".

According to the present disclosure, commodity attributes of the commodity can be determined based on a visual feature of the commodity, a tactile feature of the commodity, a design feature of the commodity, a brand feature of the commodity, a text feature of the commodity, or a category of the commodity. For example, based on the visual feature of the commodity, it can be determined that the commodity attributes include a "Morandi color Series" or "pink series". Based on the design feature of the commodity, it can be determined that the commodity attributes include "Minimalist Style", "Gothic Style" or "Industrial Style". Based on the brand feature of the commodity, it can be determined that the commodity attributes include "HERMES", "LV" or "PRADA". Based on the text feature of the commodity, it can be determined that the commodity attributes include "I Need a Raise", "Early Retirement", or "I

♥

TW". Based on the category of the commodity, it can be determined that the commodity attributes include "Boutique", "Dinner Bag" or "Necklace".

The procedure 200 may include an operation 207. The operation 207 includes determining, based on the first set of user attributes, the second set of user attributes and the third set of user attributes, a user attribute score. The operation 207 can determine, based on the first set of user attributes, the second set of user attributes and the third set of user attributes, and via a corresponding processing module, the user attribute score.

The procedure 200 may include an operation 208. The operation 208 includes determining, based on the first set of user attributes, the second set of user attributes, the third set of user attributes and a first set of commodity attributes of the commodity, a matching score of the commodity. The operation 207 can determine, based on the first set of user attributes, the second set of user attributes, the third set of user attributes and the first set of commodity attributes of the commodity, and via a corresponding processing module, the matching score of the commodity. The operation 208 may further include receiving commodity data and/or corresponding commodity attributes from the database 120 via a corresponding communication module. A matching score of this commodity for the user is determined based on the matching degree between the first set of user attributes, the second set of user attributes, the third set of user attributes, and the first set of commodity attributes of the commodity.

The procedure 200 may include an operation 209. The operation 209 includes adding a commodity to a recommendation list of the user in response to the matching score of the commodity being greater than or equal to a predetermined proportion of the user attribute score. In some embodiments, in response to the matching score of the commodity being greater than or equal to the predetermined proportion of the user attribute score, a signal may be transmitted via the corresponding communication module to indicate that the commodity is added into the recommendation list of the user.

If the predetermined proportion of the operation 209 is set to 100%, the matching score of the commodity must be equal to the user attribute score before the commodity can be added into the recommendation list of the user. In other words, if the predetermined proportion of operation 209 is set to 100%, the commodity attributes of the commodity must be equal to a particular combination of the first set of user attributes, the second set of user attributes, and the third set of user attributes before the commodity can be added to the recommendation list of the user. If the predetermined proportion of the operation 209 is set to 100%, the range of a recommended commodity is relatively limited. According to certain embodiments of the present disclosure, if the predetermined proportion of the operation 209 is set to between 60% and 90%, the range of a recommended commodity is relatively unrestricted. Since the range of the recommended commodity is relatively unrestricted, user's fatigue caused by browsing a large number of similar commodities can be effectively reduced, and the probability of the recommended commodity being purchased can be improved. According to the particular embodiment of the present disclosure, if the predetermined proportion of the operation 209 is set to 80%, the probability of the recommended commodity being purchased can be effectively improved.

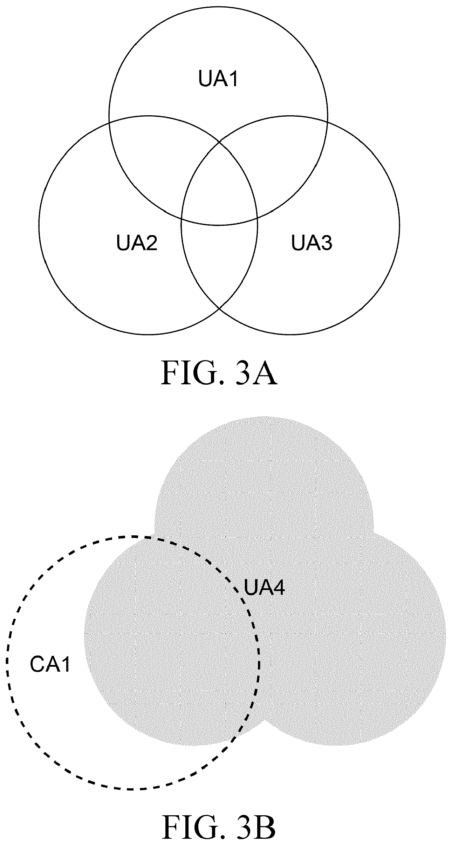

FIGS. 3A and 3B illustrate a schematic diagram of calculation of a user attribute score and a matching score according to some embodiments of the present disclosure. The calculation method disclosed in FIGS. 3A and 3B can be performed by the system 100. The calculation method disclosed in FIGS. 3A and 3B can be performed by the processing module 113 of the server 110 or by the processing module 123 of the database 120.

A set of user attributes described in the present disclosure may be a collection, elements of which are attributes. For example, the first set of user attributes may be a collection UA1 = {mobile phone, with a brand of Sony, applicable to Sony, Xperia and Android}. A set of commodity attributes described in the present disclosure may be a collection, elements of which are attributes. For example, the first set of commodity attributes may be a collection CA1 = {mobile phone, with a brand of Apple, applicable to Apple, iPhone and iOS}.

FIG. 3A illustrates a first set of user attributes UA1, a second set of user attributes UA2, and a third set of user attributes UA3. A fourth set of user attributes UA4 is determined based on the first set of user attributes UA1, the second set of user attributes UA2, and the third set of user attributes UA3. The fourth set of user attributes UA4 may be a union of the first set of user attributes UA1, the second set of user attributes UA2, and the third set of user attributes UA3. The user attribute score of the user is determined based on the fourth set of user attributes UA4. The user attribute score of this user may be the number of attributes in the fourth set of user attributes UA4.

For example, suppose that the first set of user attributes UA1 = {a, b, c}, the second set of user attributes UA2 = {c, d, e}, and the third set of user attributes UA3 = {d, e, f, g}, each of elements a, b, c, d, e, f and g is an attribute. Based on the union of the first set of user attributes UA1, the second set of user attributes UA2 and the third set of user attributes UA3, the fourth set of user attributes UA4 = UA1 $\cup$ UA2 $\cup$ UA3 = {a, b, c, d, e, f, g}. The user attribute score of a corresponding user is n (UA4) = |UA4| = 7.

FIG. 3B illustrates the fourth set of user attributes UA4 (as shown by a gray shape in FIG. 3B) and the first set of commodity attributes CA1 of a commodity (as shown by a circle drawn with a dotted line in FIG. 3B). A second set of commodity attributes CA2 of the commodity is determined based on the fourth set of user attributes UA4 and the first set of commodity attributes CA1. The second set of commodity attributes CA2 of the commodity may be an intersection of the fourth set of user attributes UA4 and the first set of commodity attributes CA1. The matching degree between a user and the commodity is determined based on the second set of commodity attributes CA2 of the commodity. The user attribute score of the user and the matching score of the commodity are determined based on the second set of commodity attributes CA2 of the commodity. The user attribute score of this user and the matching score of the commodity may be the number of attributes in the second set of commodity attributes CA2 of the commodity.

For example, when the fourth set of user attributes UA4 = {a, b, c, d, e, f, g} and the first set of commodity attributes CA1 = {c, d, e, h, i, j}, each of elements c, d, e, h, i, j is an attribute. Based on the intersection of the fourth set of user attributes UA4 and the first set of commodity attributes CA1, the second set of commodity attributes CA2 = UA4 $\cap$ CA1 = {c, d, e}. The user attribute score of the corresponding user and the matching score of the commodity are: n (CA2) = |CA2| = 3.

Suppose that the predetermined proportion described in the operation 209 is 80%. The user attribute score is 7, and the matching score is 3, and 3 is less than 7 * 80%. Therefore, a corresponding commodity will not be added into the commodity recommendation list of the corresponding user.

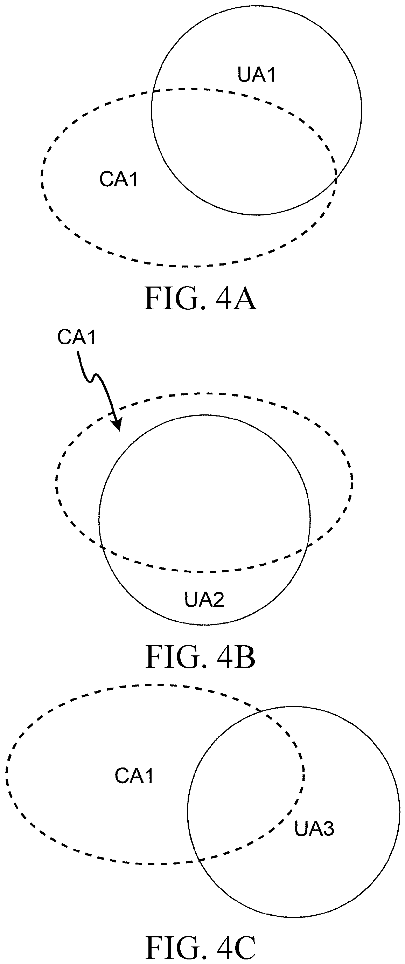

FIGS. 4A to 4C illustrate calculation of a user attribute score and a matching score according to some embodiments of the present disclosure. The calculation method disclosed in FIGS. 4A to 4C can be performed by the system 100. The calculation method disclosed in FIGS. 4A to 4C can be performed by the processing module 113 of the server 110 or by the processing module 123 of the database 120.

In the calculation method of the user attribute score in FIGS. 4A to 4C, the user attribute score of the user is determined based on the number of attributes in the first set of user attributes UA1, the number of attributes in the second set of user attributes UA2, and the number of attributes in the third set of user attributes UA3. The user attribute score of this user may be a sum of the number of the attributes in the first set of user attributes UA1, the number of the attributes in the second set of user attributes UA2, and the number of the attributes in the third set of user attributes UA3.

For example, suppose that the first set of user attributes UA1= {a, b, c}, the second set of user attributes UA2 = {c, d, e}, and the third set of user attributes UA3 = {d, e, f, g}. The user attribute score of the corresponding user is n (UA1) + n (UA2) + n (UA3)= |UA1| + |UA2| + |UA3| = 10.

In this embodiment, duplicate attributes (elements) will be repeatedly calculated for scores. If an attribute c appears in the first set of user attributes UA1 and the second set of user attributes UA2, it will be counted as 2 points. If an attribute d appears in the second set of user attributes UA2 and the third set of user attributes UA3, it will be counted as 2 points. If an attribute e appears in the second set of user attributes UA2 and the third set of user attributes UA3, it will be counted as 2 points.

FIG. 4A illustrates a first set of user attributes UA1 (as shown by a circle drawn with a solid line in FIG. 4A) and a first set of commodity attributes CA1 (as shown by an ellipse drawn with a dashed line in FIG. 4A) of a commodity. FIG. 4B illustrates a second set of user attributes UA2 (as shown by a circle drawn with a solid line in FIG. 4B) and a first set of commodity attributes CA1 (as shown by an ellipse drawn with a dotted line in FIG. 4B) of the commodity. FIG. 4C illustrates a third set of user attributes UA3 (as shown by a circle drawn with a solid line in FIG. 4C) and a first set of commodity attributes CA1 (as shown by an ellipse drawn with a dotted line in FIG. 4C) of the commodity.

A third set of commodity attributes CA3 of the commodity is determined based on the first set of commodity attributes CA1 and the first set of user attributes UA1. The third set of commodity attributes CA3 of the commodity may be an intersection of the first set of commodity attributes CA1 and the first set of user attributes UA1, that is, CA3 = CA1 $\cap$ UA1. A fourth set of commodity attributes CA4 of the commodity is determined based on the first set of commodity attributes CA1 and the second set of user attributes UA2. The fourth set of commodity attributes CA4 of the commodity may be an intersection of the first set of commodity attributes CA1 and the second set of user attributes UA2, that is, CA4 = CA1 $\cap$ UA2. A fifth set of commodity attributes CA5 of the commodity is determined based on the first set of commodity attributes CA1 and the third set of user attributes UA3. The fifth set of commodity attributes CA5 of the commodity may be an intersection of the first set of commodity attributes CA1 and the third set of user attributes UA3, that is, CA5 = CA1 $\cap$ UA3.

The matching degree between a user and the commodity is determined based on the number of attributes in the third set of commodity attributes CA3, the number of attributes in the fourth set of commodity attributes CA4, and the number of attributes in the fifth set of commodity attributes CA5. The user attribute score of the user and the matching score of the commodity are determined based on the number of the attributes in the third set of commodity attributes CA3, the number of the attributes in the fourth set of commodity attributes CA4, and the number of the attributes in the fifth set of commodity attributes CA5. The user attribute score of this user and the matching score of the commodity may be a sum of the number of the attributes in the third set of commodity attributes CA3, the number of the attributes in the fourth set of commodity attributes CA4, and the number of the attributes in the fifth set of commodity attributes CA5 of the commodity.

For example, the first set of user attributes UA1 = {a, b, c}, the second set of user attributes UA2 = {c, d, e}, the third set of user attributes UA3 = {d, e, f, g}, and the first set of commodity attributes CA1 = {a, c, d, e, f}. Based on the intersection of the first set of commodity attributes CA1 and the first set of user attributes UA1, the third set of commodity attributes CA3 = {a, c}. Based on the intersection of the first set of commodity attributes CA1 and the second set of user attributes UA2, the fourth set of commodity attributes CA4 = {c, d, e}. Based on the intersection of the first set of commodity attributes CA1 and the third set of user attributes UA3, the fifth set of commodity attributes CA5 = {d, e, f}. The user attribute score of the corresponding user and the matching score of the commodity are:

$$n\,(CA3) + n\,(CA4) + n\,(CA5) = |CA3| + |CA4| + |CA5| = 8.$$

Suppose that the predetermined proportion described in the operation 209 is 80%. The user attribute score is 10, and the matching score is 8, and 8 is equal to 10 * 80%. Therefore, a corresponding commodity will be added into the commodity recommendation list of the corresponding user.

In this embodiment, duplicate attributes (elements) will be repeatedly calculated for scores. If an attribute c appears in the first set of user attributes UA1 and the second set of user attributes UA2, it will be counted as 2 points. If an attribute d appears in the second set of user attributes UA2 and the third set of user attributes UA3, it will be counted as 2 points. If an attribute e appears in the second set of user attributes UA2 and the third set of user attributes UA3, it will be counted as 2 points.

In another calculation method of the user attribute score in FIGS. 4A to 4C, the user attribute score of the user is determined based on the number of the attributes in the first set of user attributes UA1, the number of the attributes in the second set of user attributes UA2, the number of the attributes in the third set of user attributes UA3 and corresponding weight values. A first user weighted score can be determined based on a product of the number of the attributes in the first set of user attributes UA1 and a first weight value W1; a second user weighted score can be determined based on a product of the number of the attributes in the second set of user attributes UA2 and a second weight value W2; and a third user weighted score can be determined based on a product of the number of the attributes in the third set of user attributes UA3 and a third weight value W3. The user attribute score of this user may be a sum of the first user weighted score, the second user weighted score and the third user weighted score.

For example, suppose that the first set of user attributes UA1 = {a, b, c}, the second set of user attributes UA2 = {c, d, e}, and the third set of user attributes UA3 = {d, e, f, g}, the first weight value W1 is 3, the second weight value W2 is 2, and the third weight value W3 is 1, the user attribute score of the corresponding user is:

$$n\,(UA1) * 3 + n\,(UA2) * 2 + n\,(UA3) * 1 = |UA1| * 3 + |UA2| * 2 + |UA3| * 1 = 19.$$

In this embodiment, in addition to repeatedly calculating the duplicate attributes (elements) for scores, attributes that appear in different sets also have different weights.

FIG. 4A illustrates a first set of user attributes UA1 (as shown by a circle drawn with a solid line in FIG. 4A) and a first set of commodity attributes CA1 (as shown by an ellipse drawn with a dashed line in FIG. 4A) of a commodity. FIG. 4B illustrates a second set of user attributes UA2 (as shown by a circle drawn with a solid line in FIG. 4B) and a first set of commodity attributes CA1 (as shown by an ellipse drawn with a dotted line in FIG. 4B) of the commodity. FIG. 4C illustrates a third set of user attributes UA3 (as shown by a circle drawn with a solid line in FIG. 4C) and a first set of commodity attributes CA1 (as shown by an ellipse drawn with a dotted line in FIG. 4C) of the commodity.

The third set of commodity attributes CA3 of the commodity is determined based on the first set of commodity attributes CA1 and the first set of user attributes UA1. The third set of commodity attributes CA3 of the commodity may be the intersection of the first set of commodity attributes CA1 and the first set of user attributes UA1. The fourth set of commodity attributes CA4 of the commodity is determined based on the first set of commodity attributes CA1 and the second set of user attributes UA2. The fourth set of commodity attributes CA4 of the commodity may be the intersection of the first set of commodity attributes CA1 and the second set of user attributes UA2. The fifth set of commodity attributes CA5 of the commodity is determined based on the first set of commodity attributes CA1 and the third set of user attributes UA3. The fifth set of commodity attributes CA5 of the commodity may be the intersection of the first set of commodity attributes CA1 and the third set of user attributes UA3.

In another calculation method of a matching score in FIGS. 4A to 4C, the matching degree between a user and the commodity is determined based on the number of the attributes in the third set of commodity attributes CA3, the number of the attributes in the fourth set of commodity attributes CA4, the number of the attributes in the fifth set of commodity attributes CA5 and the corresponding weight values. The user attribute score of the user and the matching score of the commodity are determined based on the number of the attributes in the third set of commodity attributes CA3, the number of the attributes in the fourth set of commodity attributes CA4, the number of the attributes in the fifth set of commodity attributes CA5 and the corresponding weight values. A first commodity weighted score is determined based on the product of the number of the attributes in the third set of commodity attributes CA3 and the first weight value W1; a second commodity weighted score is determined based on the product of the number of the attributes in the fourth set of commodity attributes CA4 and the second weight value W2; and a third commodity weighted score is determined based on the product of the number of the attributes in the fifth set of commodity attributes CA5 and the third weight value W3. The user attribute score of this user and the matching score of the commodity may be a sum of the first commodity weighted score, the second commodity weighted score, and the third commodity weighted score.

For example, when the first set of user attributes UA1 = {a, b, c}, the second set of user attributes UA2 = {c, d, e}, the third set of user attributes UA3 = {d, e, f, g}, and the first set of commodity attributes CA1 = {a, c, d, e, f}. Based on the intersection of the first set of commodity attributes CA1 and the first set of user attributes UA1, the third set of commodity attributes CA3 = {a, c}. Based on the intersection of the first set of commodity attributes CA1 and the second set of user attributes UA2, the fourth set of commodity attributes CA4 = {c, d, e}. Based on the intersection of the first set of commodity attributes CA1 and the third set of user attributes UA3, the fifth set of commodity attributes CA5 = {d, e, f}. The first weight value W1 is 3, the second weight value W2 is 2, and the third weight value W3 is 1. The user attribute score of the corresponding user and the matching score of the commodity are:

$$n\,(CA3) * 3 + n\,(CA4) * 2 + n\,(CA5) * 1 = |CA3| * 3 + |CA4| * 2 + |CA5| * 1 = 15.$$

Suppose that the predetermined proportion described in the operation 209 is 80%. The user attribute score is 19, and the matching score is 15, and 15 is less than 19 * 80%. Therefore, a corresponding commodity will not be added into the commodity recommendation list of the corresponding user.

In this embodiment, the duplicate attributes (elements) will be repeatedly calculated for scores, and attributes that appear in different sets also have different weights.

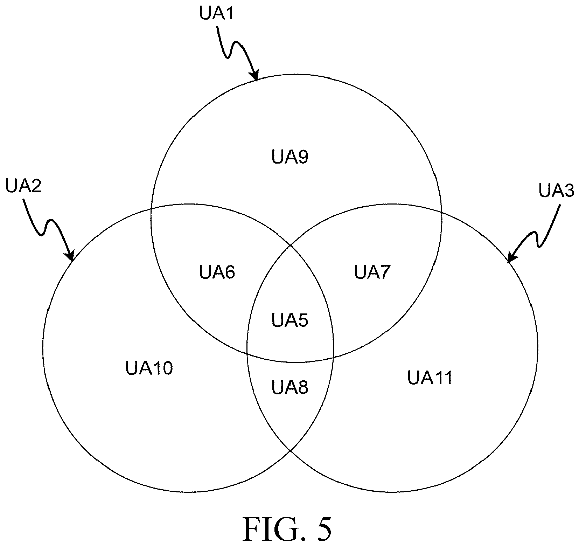

FIG. 5 illustrates a schematic diagram of calculation of a user attribute score and a matching score according to some embodiments of the present disclosure. The calculation method disclosed in FIG. 5 can be performed by the system 100. The calculation method disclosed in FIG. 5 can be performed by the processing module 113 of the server 110 or by the processing module 123 of the database 120.

In the calculation method of the user attribute score in FIG. 5, an attribute that is repeated for different times is determined based on the number of the attributes in the first set of user attributes UA1, the number of the attributes in the second set of user attributes UA2 and the number of the attributes in the third set of user attributes UA3.

FIG. 5 illustrates a first set of user attributes UA1 (a circle drawn with a solid line), a second set of user attributes UA2 (a circle drawn with a solid line) and a third set of user attributes UA3 (a circle drawn with a solid line). A fifth set of user attributes UA5 is determined based on an intersection of the first set of user attributes UA1, the second set of user attributes UA2, and the third set of user attributes UA3. In other words, UA5 = UA1 ∩ UA2 ∩ UA3. A sixth set of user attributes UA6 can be determined by subtracting the fifth set of user attributes UA5 from the intersection of the first set of user attributes UA1 and the second set of user attributes UA2. In other words, UA6 = (UA1 ∩ UA2) - UA5. A seventh set of user attributes can be determined by subtracting the fifth set of user attributes UA5 from the intersection of the first set of user attributes UA1 and the third set of user attributes UA3. In other words, UA7 = (UA1 ∩ UA3) - UA5. An eighth set of user attributes UA8 can be determined by subtracting the fifth set of user attributes UA5 from the intersection of the second set of user attributes UA2 and the third set of user attributes UA3. In other words, UA8 = (UA2∩UA3) - UA5. A ninth set of user attributes can be determined by subtracting a union of the fifth set of user attributes UA5, the sixth set of user attributes UA6, and a seventh set of user attributes UA7 from the first set of user attributes UA1. In other words, UA9 = UA1 - (UA5 ∪ UA6 ∪ UA7). A tenth set of user attributes UA10 can be determined by subtracting a union of the fifth set of user attributes UA5, the sixth set of user attributes UA6, and the eighth set of user attributes UA8 from the second set of user attributes UA2. In other words, UA10 = UA2 - (UA5 ∪ UA6 ∪ UA8). An eleventh set of user attributes UA11 can be determined by subtracting a union of the fifth set of user attributes UA5, the seventh set of user attributes UA7, and the eighth set of user attributes UA8 from the third set of user attributes UA3. In other words, UA11 = UA3 - (UA5 ∪ UA7 ∪ UA8).

The fifth set of user attributes UA5 includes attributes that appear in the first set of user attributes UA1, the second set of user attributes UA2 and the third set of user attributes UA3. The sixth set of user attributes UA6 includes attributes that only appear in the first set of user attributes UA1 and the second set of user attributes UA2. The seventh set of user attributes UA7 includes attributes that only appear in the first set of user attributes UA1 and the third set of user attributes UA3. The eighth set of user attributes UA8 includes attributes that only appear in the second set of user attributes UA2 and the third set of user attributes UA3. The ninth set of user attributes UA9 includes attributes that only appear in the first set of user attributes UA1. The tenth set of user attributes UA10 includes attributes that only appear in the second set of user attributes UA2. The eleventh set of user attributes UA11 includes attributes that only appear in the third set of user attributes UA3.

A fourth user weighted score can be determined based on the product of the number of attributes in the fifth set of user attributes UA5 and a fourth weight value W4. In other words, the fourth user weighted score is n (UA5) * W4 or |UA5| * W4. A fifth user weighted score can be determined based on the product of the number of attributes in the fifth set of user attributes UA5 and a fifth weight value W5. In other words, the fifth user weighted score is n (UA6) * W5 or |UA6| * W5. A sixth user weighted score can be determined based on the product of the number of attributes in the seventh set of user attributes UA7 and a sixth weight value W6. In other words, the fourth user weighted score is n (UA7) * W6 or |UA7| * W6. A seventh user weighted score can be determined based on the product of the number of attributes in the eighth set of user attributes UA8 and a seventh weight value. In other words, the seventh user weighted score is n (UA8) * W7 or |UA8| * W7. An eighth user weighted score can be determined based on the product of the number of attributes in the ninth set of user attributes UA9 and an eighth weight value W8. In other words, the eighth user weighted score is n (UA9) * W8 or |UA9| * W8. The ninth user weighted score can be determined based on the product of the number of attributes in the tenth set of user attributes UA10 and a ninth weight value W9. In other words, the ninth user weighted score is n (UA10) * W9 or |UA10| * W9. A tenth user weighted score can be determined based on the product of the number of attributes in the eleventh set of user attributes UA11 and a tenth weight value W10. In other words, the tenth user weighted score is n (UA11) * W10 or |UA11| * W10.

The fourth weight value W4, the fifth weight value W5, the sixth weight value W6, the seventh weight value W7, the eighth weight value W8, the ninth weight value W9 and the tenth weight value W10 can be further adjusted based on the number of repetitions of the attribute and/or the attributes (such as the first set of user attributes, the second set of user attribute or the third set of user attributes) appearing in any set of user attributes. In some embodiments, if the weight value is adjusted based on the number of repetitions of the attribute, the fourth weight value W4 may be a first value, the fifth weight value W5, the sixth weight value W6 and the seventh weight value W7 may be a second value, and the eighth weight value W8, the ninth weight value W9 and the tenth weight value W10 may be a third value, where the first value, the second value and the third value are different.

The user attribute score of this user may be a sum of the aforementioned fourth user weighted score to the aforementioned tenth user weighted score.

For example, if the first set of user attributes UA1 = {a, b, c, g}, the second set of user attributes UA2 = {a, c, d, e}, and the third set of user attributes UA3 = {c, d, f, g}, the fifth set of user attributes UA5 = {c}, the sixth set of user attributes UA6 = {a}, the seventh set of user attributes UA7 = {g}, the eighth set of user attributes UA8 = {d}, the ninth set of user attributes UA9 = {b}, the tenth set of user attributes UA10 = {e}, and the eleventh set of user attributes UA11 = {f}. The user attribute score of the corresponding user is:

$$n(UA5) * W4 + n(UA6) * W5 + n(UA7) * W6 + n(UA8) * W7 +$$
$$n(UA9) * W8 + n(UA10) * W9 + n(UA11) * W10 = |UA5| * W4 + |UA6| *$$
$$W5 + |UA7| * W6 + |UA8| * W7 + |UA9| * W8 + |UA10| * W9 + |UA11| *$$
$$W10 = W4 + W5 + W6 + W7 + W8 + W9 + W10.$$

A sixth set of commodity attributes CA6 can be determined based on an intersection of the first set of commodity attributes CA1 of a commodity and the fifth set of user attributes UA5. In other words, CA6 = CA1 ∩ UA5. A seventh set of commodity attributes CA7 can be determined based on an intersection of the first set of commodity attributes CA1 and the sixth set of user attributes UA6. In other words, CA7 = CA1 ∩ UA6. An eighth set of commodity attributes CA8 can be determined based on an intersection of the first set of commodity attributes CA1 and the seventh set of user attributes UA7. In other words, CA8 = CA1 ∩ UA7. A ninth set of commodity attributes CA9 can be determined based on an intersection of the first set of commodity attributes CA1 and the eighth set of user attributes UA8. In other words, CA9 = CA1 ∩ UA8. A tenth set of commodity attributes CA10 can be determined based on an intersection of the first set of commodity attributes CA1 and the ninth set of user attributes UA9. In other words, CA10 = CA1 ∩ UA9. An eleventh set of commodity attributes CA11 can be determined based on an intersection of the first set of commodity attributes CA1 and the tenth set of user attributes UA10. In other words, CA11 = CA1 ∩ UA10. A twelfth set of commodity attributes CA12 can be determined based on an intersection of the first set of commodity attributes CA1 and the eleventh set of user attributes UA11. In other words, CA12 = CA1 ∩ UA11.

A fourth commodity weighted score can be determined based on the product of the number of attributes in the sixth set of commodity attributes CA6 and the fourth weight value W4. In other words, the fourth commodity weighted score is n (CA6) * W4 or |CA6| * W4. A fifth commodity weighted score can be determined based on the product of the number of attributes in the seventh set of commodity attributes CA7 and the fifth weight value W5. In other words, the fifth commodity weighted score is n (CA7) * W5 or |CA7| * W5. A sixth commodity weighted score can be determined based on the product of the number of attributes in the eighth set of commodity attributes CA8 and the sixth weight value W6. In other words, the sixth commodity weighted score is n (CA8) * W6 or |CA8| * W6. A seventh commodity weighted score can be determined based on the product of the number of attributes in the ninth set of commodity attributes CA9 and the seventh weight value W7. In other words, the seventh commodity weighted score is n (CA9) * W7 or |CA9| * W7. An eighth commodity weighted score can be determined based on the product of the number of attributes in the tenth set of commodity attributes CA10 and the eighth weight value W8. In other words, the eighth commodity weighted score is n (CA10) * W8 or |CA10| * W8. A ninth commodity weighted score can be determined based on the product of the number of attributes in the eleventh set of commodity attributes CA11 and the ninth weight value W9. In other words, the ninth commodity weighted score is n (CA11) * W9 or |CA11| * W9. A tenth commodity weighted score can be determined based on the product of the number of attributes in the twelfth set of commodity attributes CA12 and the tenth weight value W10. In other words, the tenth commodity weighted score is n (CA12) * W10 or |CA12| * W10.

The matching degree between a user and the commodity is determined based on the aforementioned fourth commodity weighted score to the aforementioned tenth commodity weighted score. The user attribute score of the user and the matching score of the commodity can be determined based on the aforementioned fourth commodity weighted score to the aforementioned tenth commodity weighted score. The user attribute score of this user and the matching score of the commodity may be a sum of the aforementioned fourth commodity weighted score to the aforementioned tenth commodity weighted score. The user attribute score of this user and the matching score of the commodity may be:

$$n(CA6) * W4 + n(CA7) * W5 + n(CA8) * W6 + n(CA9) * W7 +$$
$$n(CA10) * W8 + n(CA11) * W9 + n(CA12) * W10 = |CA6| * W4 + |CA7| *$$
$$W5 + |CA8| * W6 + |CA9| * W7 + |CA10| * W8 + |CA11| * W9 + |CA12| *$$
$$W10.$$

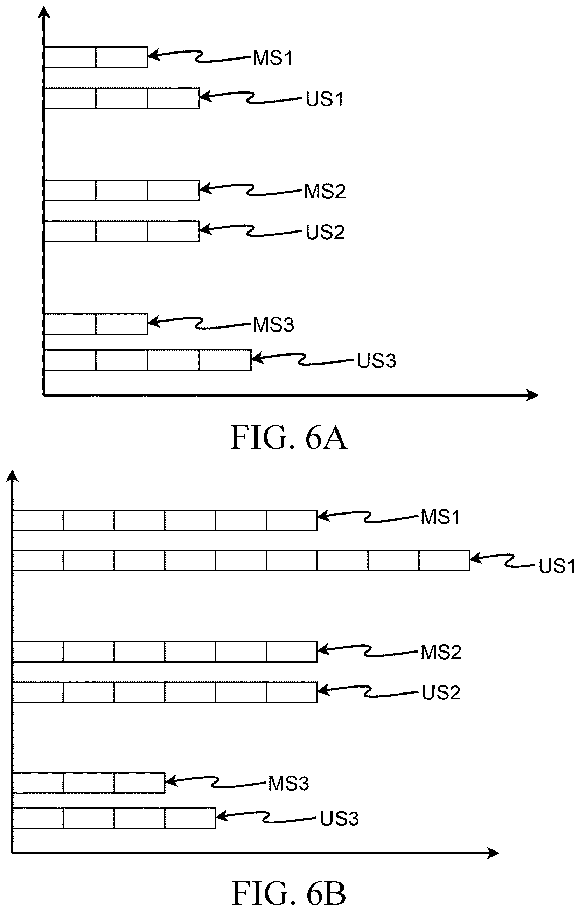

FIGS. 6A and 6B illustrate a schematic diagram of calculation of a user attribute score and a matching score according to some embodiments of the present disclosure. The calculation method disclosed in FIGS. 6A and 6B can be performed by the system 100. The calculation method disclosed in FIG. 5 can be performed by the processing module 113 of the server 110 or by the processing module 123 of the database 120.

In the calculation method of the user attribute score in FIGS. 6A and 6B, the user attribute score of the user may further include a first user attribute score, a second user attribute score and a third user attribute score. The first user attribute score can be determined based on the first set of user attributes UA1. The second user attribute score can be determined based on the second set of user attributes UA2. The third user attribute score can be determined based on the third set of user attributes UA3.

For example, the first user attribute score, second user attribute score and third user attribute score of the user can be determined based on the number of the attributes in the first set of user attributes UA1, the number of the attributes in the second set of user attributes UA2 and the number of the attributes in the third set of user attributes UA3, respectively. The first user attribute score can be determined based on the number of the attributes in the first set of user attributes UA1; the second user attribute score can be determined based on the number of the attributes in the second set of user attributes UA2; and the third user attribute score can be determined based on the number of the attributes in the third set of user attributes UA3.

In some embodiments, the first set of user attributes UA1 = {a, b, c}, the second set of user attributes UA2 = {c, d, e}, and the third set of user attributes UA3 = {d, e, f, g}. In the embodiment as shown in FIG. 6A, the first user attribute score $US1 = n(UA1) = |UA1| = 3$; the second user attribute score $US2 = n(UA2) = |UA2| = 3$; and the third user attribute score $US3 = n(UA3) = |UA3| = 4$.

In some embodiments, the first user attribute score, second user attribute score and third user attribute score of the user can be determined based on the number of the attributes in the first set of user attributes UA1, the number of the attributes in the second set of user attributes UA2, the number of the attributes in the third set of user attributes UA3 and the corresponding weight values. The first user attribute score can be determined based on the product of the number of the attributes in the first set of user attributes UA1 and the first weight value W1; the second user attribute score can be determined based on the product of the number of the attributes in the second set of user attributes UA2 and the second weight value W2; and the third user attribute score can be determined based on the product of the number of the attributes in the third set of user attributes UA3 and the third weight value W3.

In some embodiments, the first set of user attributes UA1 = {a, b, c}, the second set of user attributes UA2 = {c, d, e}, the third set of user attributes UA3 = {d, e, f, g}, the first weight value W1 is 3, the second weight value W2 is 2, and the third weight value W3 is 1. In the embodiment as shown in FIG. 6B, the first user attribute score $US1 = n(UA1) * 3 = |UA1| * 3 = 9$; the second user attribute score $US2 = n(UA2) * 2 = |UA2| * 2 = 6$; and the third user attribute score $US3 = n(UA3) * 1 = |UA3| * 1 = 4$.

In the calculation method of the matching score in FIGS. 6A and 6B, the matching score may further include a first matching score, a second matching score and a third matching score. The first matching score can be determined based on the first set of user attributes UA1 and the first set of commodity attributes CA1 of a commodity. The second matching score can be determined based on the second set of user attributes UA2 and the first set of commodity attributes CA1. The third matching score can be determined based on the third set of user attributes UA3 and the first set of commodity attributes CA1.

For example, the third set of commodity attributes CA3 of the commodity can be determined based on the intersection of the first set of commodity attributes CA1 and the first set of user attributes UA1. In other words, CA3 = CA1 ∩ UA1. The fourth set of commodity attributes CA4 of the commodity is determined based on the intersection of the first set of commodity attributes CA1 and the second set of user attributes UA2. In other words, CA4 = CA1 ∩ UA2. The fifth set of commodity attributes CA5 of the commodity can be determined based on the intersection of the first set of commodity attributes CA1 and the third set of user attributes UA3. In other words, CA5 = CA1 ∩ UA3.

In some embodiments, the first matching score, second matching score and third matching score of the user can be determined based on the number of the attributes in the third set of commodity attributes CA3, the number of the attributes in the fourth set of commodity attributes CA4, and the number of the attributes in the fifth set of commodity attributes CA5. The first matching score can be determined based on the number of the attributes in the third set of commodity attributes CA3; the second matching score can be determined based on the number of the attributes in the fourth set of commodity attributes CA4; and the third matching score can be determined based on the number of the attributes in the fifth set of commodity attributes CA5.

In some embodiments, the first set of user attributes UA1 = {a, b, c}, the second set of user attributes UA2 = {c, d, e}, the third set of user attributes UA3 = {d, e, f, g}, and the first set of commodity attributes CA1 = {a, c, d, e, f}. Based on the intersection of the first set of commodity attributes CA1 and the first set of user attributes UA1, the third set of commodity attributes CA3 = CA1 ∩ UA1 = {a, c}. Based on the intersection of the first set of commodity attributes CA1 and the second set of user attributes UA2, the fourth set of commodity attributes CA4 = CA1 ∩ UA2 = {c, d, e}. Based on the intersection of the first set of commodity attributes CA1 and the third set of user attributes UA3, the fifth set of commodity attributes CA5 = CA1 ∩ UA3 = {d, e, f}. In the embodiment as shown in FIG. 6A, the first matching score MS1 = n (CA3) = |CA3| = 2; the second matching score MS2 = n (CA4) = |CA4| = 3; and the third matching score MS3 = n (CA5) = |CA5| = 3.

In some embodiments, the first matching score, second matching score and third matching score of the user can be determined based on the number of the attributes in the third set of commodity attributes CA3, the number of the attributes in the fourth set of commodity attributes CA4, the number of attributes in the fifth set of commodity attributes CA5 and the corresponding weight values. The first user attribute score can be determined based on the product of the number of the attributes in the third set of commodity attributes CA3 and the first weight value W1; the second user attribute score can be determined based on the product of the number of the attributes in the fourth set of commodity attributes CA4 and the second weight value W2; and the third user attribute score can be determined based on the product of the number of the attributes in the fifth set of commodity attributes CA5 and the third weight value W3.

In some embodiments, the first set of user attributes UA1 = {a, b, c}, the second set of user attributes UA2 = {c, d, e}, the third set of user attributes UA3 = {d, e, f, g}, the first set of commodity attributes CA1 = {a, c, d, e, f}, the first weight value W1 is 3, the second weight value W2 is 2, and the third weight value W3 is 1. The third set of commodity attributes CA3 = CA1 ∩ UA1 = {a, c}. The fifth set of commodity attributes CA4 = CA1 ∩ UA2 = {c, d, e}. The fifth set of commodity attributes CA5 = CA1 ∩ UA3 = {d, e, f}. In the embodiment as shown in FIG. 6B, the first matching score may be MS1 = n (CA3) * 3 = |CA3| * 3 = 6; the second matching score may be MS2 = n (CA4) * 2 = |CA4| * 2 = 6; and the third matching score may be MS3 = n (CA5) * 1 = |CA5| * 1 = 3.

Whether to add the corresponding commodity into the commodity recommendation list of the corresponding user can be determined based on events such as whether the first matching score is greater than or equal to a first predetermined proportion of the first user attribute score, whether the second matching score is greater than or equal to a second predetermined proportion of the second user attribute score, and whether the third matching score is greater than or equal to a third predetermined proportion of the third user attribute score.

For example, the corresponding commodity can be added into the commodity recommendation list of the corresponding user in response to at least one of the following three events being true: (1) whether the first matching score is greater than or equal to the first predetermined proportion of the first user attribute score, (2) whether the second matching score is greater than or equal to the second predetermined proportion of the second user attribute score, and (3) whether the third matching score is greater than or equal to the third predetermined proportion of the third user attribute score. The corresponding commodity can be added into the commodity recommendation list of the corresponding user in response to at least two of the following three events being true: (1) whether the first matching score is greater than or equal to the first predetermined proportion of the first user attribute score, (2) whether the second matching score is greater than or equal to the second predetermined proportion of the second user attribute score, and (3) whether the third matching score is greater than or equal to the third predetermined proportion of the third user attribute score. The corresponding commodity can be added into the commodity recommendation list of the corresponding user in response to all of the following three events being true: (1) whether the first matching score is greater than or equal to the first predetermined proportion of the first user attribute score, (2) whether the second matching score is greater than or equal to the second predetermined proportion of the second user attribute score, and (3) whether the third matching score is greater than or equal to the third predetermined proportion of the third user attribute score.

The first predetermined proportion, the second predetermined proportion, and the third predetermined proportion can be set between 60% and 90%, and the range of the recommended commodity is relatively unrestricted. Since the range of the recommended commodity is relatively unrestricted, the user's fatigue caused by browsing a large number of similar commodities can be effectively reduced, and the probability of the recommended commodity being purchased can be improved. The aforementioned first predetermined proportion, second predetermined proportion and third predetermined proportion can be adjusted, based on the importance of different sets of user attributes, to different values. For example, if the first set of user attributes is relatively important for the recommended commodity, the first predetermined proportion can be set to be smaller than the second predetermined proportion and the third predetermined proportion. In some embodiments, the first predetermined proportion, the second predetermined proportion, and the third predetermined proportion may be a same value.

In some embodiments, each of the first predetermined proportion, the second predetermined proportion and the third predetermined proportion is 80%, and the corresponding commodity can be added into the commodity recommendation list of the corresponding user in response to at least one of the following three events being true: (1) whether the first matching score is greater than or equal to the first predetermined proportion of the first user attribute score, (2) whether the second matching score is greater than or equal to the second predetermined proportion of the second user attribute score, and (3) whether the third matching score is greater than or equal to the third predetermined proportion of the third user attribute score. In the embodiment as shown in FIG. 6A, MS2 = 3≥US2 * 80% = 2.4, so the corresponding commodity will be added into the commodity recommendation list of the corresponding user. In the embodiment as shown in FIG. 6B, MS2 = 6≥US2 * 80% = 4.8, so the corresponding commodity will be added into the commodity recommendation list of the corresponding user.

In some embodiments, the processing module 113 of the server 110 or the processing module 123 of the database 120 can determine the number of commodity recommendation lists that include a certain commodity. When the number of the commodity recommendation lists that include a certain commodity is greater than or equal to a threshold value, a current inventory number of the commodity can be requested from the server 110 or the database 120. In some embodiments, it can be determined that the commodity recommendation list includes the number of users for a certain commodity. When the number of the users for a certain commodity included in the commodity recommendation list is greater than or equal to the first threshold value, the current inventory number of the commodity can be requested from the server 110 or the database 120.

According to the received inventory number of the commodity, the processing module 113 of the server 110 or the processing module 123 of the database 120 can further determine whether the inventory number of the commodity is less than or equal to a second threshold value. If the inventory number of the commodity is less than or equal to the second threshold value, a signal indicating an increase in the inventory number of the commodity can be transmitted. When a management person receives the signal indicating the increase in the inventory number of the commodity, replenishment can be performed first to avoid selling out of the commodity. In some embodiments, if a replenishment procedure is relatively complex (for example, it is necessary to use an agent-purchasing method for replenishment), a smaller first threshold value and a larger second threshold value can be set to avoid selling out of the commodity.

Although the present invention has been described and explained with reference to the specific embodiments of the present disclosure, such description and explanation do not limit the present invention. Those skilled in this technology should understand that various changes can be made and equivalents can be substituted without departing from the true spirit and scope of the present invention as defined by the scope of the accompanying patent application. The explanation does not have to be drawn to scale. Due to a manufacturing process and tolerance, there may be differences between the artistic reproduction in this application and the artistic reproduction in the actual invention. There may be other embodiments of the present invention that are not specifically explained. This description and the drawing should be considered illustrative rather than restrictive. Modifications may be made to adapt the particular situation, material, material composition, method, or process to the object, spirit, and scope of the present invention. All such modifications are intended to fall within the scope of the patent application appended herein. Although the method disclosed herein have been described with reference to particular operations performed in a particular order, it will be understood that such operations can be combined, subdivided or reordered to form an equivalent method, without departing from teachings of the present invention. Therefore, unless otherwise specifically indicated herein, the order and grouping of the operations are not a limitation of the present invention. Furthermore, the effects detailed in the above embodiments and their analogues are only examples. Therefore, this application may further have additional effects.

In addition, a logical flow illustrated in the diagram does not necessarily require the particular order or sequential order shown to achieve a desired result. In addition, additional steps may be provided, or several steps may be removed from the described flow, and additional components may be added to or removed from the described system. Therefore, other embodiments are within the scope of the attached patent application.

**Claims**

1.  An electronic device for processing a commodity recommendation list, comprising:

    a communication module, configured to be communicatively coupled to a user device of a user and a database, and the communication module being configured to:

        receive a current state of the user;
        receive at least one previous order from the user;
        receive at least one browse record of the user;
        transmit a first signal in response to a matching score of a commodity being greater than or equal to a first predetermined proportion of a user attribute score, the first signal indicating that the commodity is added into a commodity recommendation list of the user;

    a memory module configured to store multiple instructions and information; and
    a processing module configured to be coupled to the communication module and the memory module and perform, based on instructions and information stored in the memory module, the following operations:

        determining, based on the current state of the user, a first set of user attributes;
        determining, based on the at least one previous order of the user, a second set of user attributes;
        determining, based on the at least one browse record of the user, a third set of user attributes;

determining, based on the first set of user attributes, the second set of user attributes and the third set of user attributes, the user attribute score; and

determining, based on the first set of user attributes, the second set of user attributes, the third set of user attributes and a first set of commodity attributes of the commodity, the matching score of the commodity.

2. The electronic device according to claim 1, wherein the processing module is further configured to:

determine, based on a union of the first set of user attributes, the second set of user attributes and the third set of user attributes, a fourth set of user attributes;

determine, based on the number of attributes in the fourth set of user attributes, the user attribute score;

determine, based on an intersection of the first set of commodity attributes and the fourth set of user attributes, a second set of commodity attributes; and

determine, based on the number of attributes in the second set of commodity attributes, the matching score.

3. The electronic device according to claim 2, wherein the processing module is further configured to:

determine, based on a sum of the number of attributes in the first set of user attributes, the number of attributes in the second set of user attributes and the number of attributes of the third set of user attributes, the user attribute score;

determine, based on an intersection of the first set of commodity attributes and the first set of user attributes, a third set of commodity attributes;

determine, based on an intersection of the first set of commodity attributes and the second set of user attributes, a fourth set of commodity attributes;

determine, based on an intersection of the first set of commodity attributes and the third set of user attributes, a fifth set of commodity attributes; and

determine, based on a sum of the number of attributes in the third set of commodity attributes, the number of attributes in the fourth set of commodity attributes and the number of attributes of the fifth set of commodity attributes, the matching score.

4. The electronic device according to claim 2, wherein the processing module is further configured to:

determine, based on a product of the number of attributes in the first set of user attributes and a first weight value, a first user weighted score;

determine, based on a product of the number of attributes in the second set of user attributes and a second weight value, a second user weighted score;

determine, based on a product of the number of attributes in the third set of user attributes and a third weight value, a third user weighted score;

determine, based on a sum of the first user weighted score, the second user weighted score and the third user weighted score, the user attribute score;

determine, based on an intersection of the first set of commodity attributes and the first set of user attributes, a third set of commodity attributes;

determine, based on an intersection of the first set of commodity attributes and the second set of user attributes, a fourth set of commodity attributes;

determine, based on an intersection of the first set of commodity attributes and the third set of user attributes, a fifth set of commodity attributes;

determine, based on a product of the number of attributes in the third set of commodity attributes and the first weight value, a first commodity weighted score;

determine, based on a product of the number of attributes in the fourth set of commodity attributes and the second weight value, a second commodity weighted score;

determine, based on a product of the number of attributes in the fifth set of commodity attributes and the third weight value, a third commodity weighted score; and

determine, based on a sum of the first commodity weighted score, the second commodity weighted score and the third commodity weighted score, the matching score.

5. The electronic device according to claim 1, wherein the user attribute score further comprises a first user attribute score, a second user attribute score, and a third user attribute score, and the matching score further comprises a first matching score, a second matching score and a third matching score, and wherein the processing module is further configured to:

determine, based on the first set of user attributes, the first user attribute score;
determine, based on the second set of user attributes, the second user attribute score;
determine, based on the third set of user attributes, the third user attribute score;
determine, based on the first set of user attributes and the first set of commodity attributes of the commodity, the first matching score;
determine, based on the second set of user attributes and the first set of commodity attributes of the commodity, the second matching score;
determine, based on the third set of user attributes and the first set of commodity attributes of the commodity, the third matching score;
set a flag to 0;
set the flag to 1 in response to the first matching score of the commodity being greater than or equal to a second predetermined proportion of the first user attribute score;
set the flag to 1 in response to the second matching score of the commodity being greater than or equal to a third predetermined proportion of the second user attribute score;
set the flag to 1 in response to the third matching score of the commodity being greater than or equal to a fourth predetermined proportion of the third user attribute score; and
add the commodity into the commodity recommendation list of the user in response to the flag being 1.

6. The electronic device according to claim 1, wherein the current state of the user comprises at least one of:
a current activity, a current mood or a current location.

7. The electronic device according to claim 1, wherein the processing module is further configured to:
determine, the first set of commodity attributes of the commodity, based on at least one of:

a visual feature of the commodity, a tactile feature of the commodity, a design feature of the commodity, a brand feature of the commodity, a text feature of the commodity or a category of the commodity;
determine, based on a first set of commodity attributes of at least one commodity in the at least one previous order, the second set of user attributes; and
determine, based on a first set of commodity attributes of at least one commodity in the at least one browse record, the third set of user attributes.

8. The electronic device according to claim 1, wherein the communication module is further configured to:

transmit, in response to the number of commodity recommendation lists comprising the commodity being greater than a first threshold value, a second signal requesting an inventory number of the commodity;
receive a third signal indicating the inventory number of the commodity; and
transmit, in response to the inventory number of the commodity being less than a second threshold value, a fourth signal of increasing the inventory of the commodity.

9. A method for recommending a commodity, comprising:

receiving a current state of a user;
determining, based on the current state of the user, a first set of user attributes;
receiving at least one previous order from the user;
determining, based on the at least one previous order of the user, a second set of user attributes;
receiving at least one browse record of the user;
determining, based on the at least one browse record of the user, a third set of user attributes;
determining, based on the first set of user attributes, the second set of user attributes and the third set of user attributes, a user attribute score;
determining, based on the first set of user attributes, the second set of user attributes, the third set of user attributes and a first set of commodity attributes of a commodity, a matching score of the commodity; and
adding, in response to the matching score of the commodity being greater than or equal to a predetermined proportion of the user attribute score, the commodity into a recommendation list of the user.

10. The method according to claim 9 further comprising:

determining, based on a union of the first set of user attributes, the second set of user attributes and the third set of user attributes, a fourth set of user attributes;

determining, based on the number of attributes in the fourth set of user attributes, the user attribute score;
determining, based on an intersection of the first set of commodity attributes and the fourth set of user attributes, a second set of commodity attributes; and
determining, based on the number of attributes in the second set of commodity attributes, the matching score.

11. The method according to claim 9 further comprising:

determining, based on a sum of the number of attributes in the first set of user attributes, the number of attributes in the second set of user attributes and the number of attributes of the third set of user attributes, the user attribute score;
determining, based on an intersection of the first set of commodity attributes and the first set of user attributes, a third set of commodity attributes;
determining, based on an intersection of the first set of commodity attributes and the second set of user attributes, a fourth set of commodity attributes;
determining, based on an intersection of the first set of commodity attributes and the third set of user attributes, a fifth set of commodity attributes; and
determining, based on a sum of the number of attributes in the third set of commodity attributes, the number of attributes in the fourth set of commodity attributes and the number of attributes of the fifth set of commodity attributes, the matching score.

12. The method according to claim 9 further comprising:

determining, based on a product of the number of attributes in the first set of user attributes and a first weight value, a first user weighted score;
determining, based on a product of the number of attributes in the second set of user attributes and a second weight value, a second user weighted score;
determining, based on a product of the number of attributes in the third set of user attributes and a third weight value, a third user weighted score;
determining, based on a sum of the first user weighted score, the second user weighted score and the third user weighted score, the user attribute score;
determining, based on an intersection of the first set of commodity attributes and the first set of user attributes, a third set of commodity attributes;
determining, based on an intersection of the first set of commodity attributes and the second set of user attributes, a fourth set of commodity attributes;
determining, based on an intersection of the first set of commodity attributes and the third set of user attributes, a fifth set of commodity attributes;
determining, based on a product of the number of attributes in the third set of commodity attributes and the first weight value, a first commodity weighted score;
determining, based on a product of the number of attributes in the fourth set of commodity attributes and the second weight value, a second commodity weighted score;
determining, based on a product of the number of attributes in the fifth set of commodity attributes and the third weight value, a third commodity weighted score; and
determining, based on a sum of the first commodity weighted score, the second commodity weighted score and the third commodity weighted score, the matching score.

13. The method according to claim 9, wherein the user attribute score further comprises a first user attribute score, a second user attribute score, and a third user attribute score, and the matching score further comprises a first matching score, a second matching score and a third matching score, and
wherein the method further comprises:

determining, based on the first set of user attributes, the first user attribute score;
determining, based on the second set of user attributes, the second user attribute score;
determining, based on the third set of user attributes, the third user attribute score;
determining, based on the first set of user attributes and the first set of commodity attributes of the commodity, the first matching score;
determining, based on the second set of user attributes and the first set of commodity attributes of the commodity, the second matching score;
determining, based on the third set of user attributes and the first set of commodity attributes of the commodity, the third matching score; and

adding a commodity into the recommendation list of the user in a case that at least one of three events is true: the first matching score of the commodity is greater than or equal to a second predetermined proportion of the first user attribute score, the second matching score of the commodity is greater than or equal to a third predetermined proportion of the second user attribute score, and the third matching score of the commodity is greater than or equal to a fourth predetermined proportion of the third user attribute score.

14. The method according to claim 9, wherein the current state of the user comprises at least one of:
a current activity, a current mood or a current location.

15. The method according to claim 9 further comprising:
determining the first set of commodity attributes of the commodity, based on at least one of:

a visual feature of the commodity, a tactile feature of the commodity, a design feature of the commodity, a brand feature of the commodity, a text feature of the commodity or a category of the commodity;
determining, based on a first set of commodity attributes of at least one commodity in the at least one previous order, the second set of user attributes; and
determining, based on a first set of commodity attributes of at least one commodity in the at least one browse record, the third set of user attributes.

FIG. 1

200

```
┌─────────────────────────────────────────────────────┐
│          Receive a current state of a user          │─── 201
└─────────────────────────────────────────────────────┘
                         │
                         ▼
┌─────────────────────────────────────────────────────┐
│  Determine, based on the current state of the user, │
│          a first set of user attributes             │─── 202
└─────────────────────────────────────────────────────┘
                         │
                         ▼
┌─────────────────────────────────────────────────────┐
│       Receive at least one previous order of the     │
│                       user                          │─── 203
└─────────────────────────────────────────────────────┘
                         │
                         ▼
┌─────────────────────────────────────────────────────┐
│  Determine, based on the at least one previous order│
│     of the user, a second set of user attributes    │─── 204
└─────────────────────────────────────────────────────┘
                         │
                         ▼
┌─────────────────────────────────────────────────────┐
│        Receive at least one browse record of the     │
│                       user                          │─── 205
└─────────────────────────────────────────────────────┘
                         │
                         ▼
┌─────────────────────────────────────────────────────┐
│  Determine, based on the at least one browse record │
│       of the user, a third set of user attributes   │─── 206
└─────────────────────────────────────────────────────┘
                         │
                         ▼
┌─────────────────────────────────────────────────────┐
│  Determine, based on the first set of user          │
│  attributes, the second set of user attributes and  │
│  the third set of user attributes, a user attribute │
│                       score                         │─── 207
└─────────────────────────────────────────────────────┘
                         │
                         ▼
┌─────────────────────────────────────────────────────┐
│  Determine, based on the first set of user          │
│  attributes, the second set of user attributes, the │
│  third set of user attributes, and a first set of   │
│  commodity attributes of the commodity, a matching  │
│          score of the commodity                     │─── 208
└─────────────────────────────────────────────────────┘
                         │
                         ▼
┌─────────────────────────────────────────────────────┐
│  Add, in response to the matching score of the      │
│  commodity being greater than or equal to a         │
│  predetermined proportion of the user attribute     │
│  score, the commodity into a recommendation list of │
│                    the user                         │─── 209
└─────────────────────────────────────────────────────┘
```

FIG. 2

FIG. 3A

FIG. 3B

FIG. 4A

FIG. 4B

FIG. 4C

UA1

UA2

UA3

UA9

UA6

UA7

UA5

UA10

UA8

UA11

FIG. 5

MS1

US1

MS2

US2

MS3

US3

FIG. 6A

MS1

US1

MS2

US2

MS3

US3

FIG. 6B

Europäisches
Patentamt

European
Patent Office

Office européen
des brevets

# EUROPEAN SEARCH REPORT

Application Number

EP 23 16 9550

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/184538 A1 (WILSON NATHAN R [US] ET AL) 11 June 2020 (2020-06-11) * abstract; claims 1-21; figures 1A-28 * * paragraphs [0007], [0040] - [0286] * | 1-15 | INV. G06Q30/0251 G06Q30/0601 |
| X | US 2014/067596 A1 (MCGOVERN ROBERT J [US] ET AL) 6 March 2014 (2014-03-06) * abstract; claims 1-21; figures 2-25 * * paragraphs [0007] - [0009], [0026] - [0172] * | 1-15 | ADD. G06Q10/087 |
| X | US 2021/192460 A1 (XU JUNRUI [US] ET AL) 24 June 2021 (2021-06-24) * abstract; claims 1-20; figures 1-6 * * paragraphs [0020] - [0089] * | 1-15 | |
| A | US 2018/075104 A1 (OBERBRECKLING ROBERT JAMES [US] ET AL) 15 March 2018 (2018-03-15) * abstract; claims 1-20; figures 1-25 * * paragraphs [0007] - [0023], [0067] - [0198] * | 1-15 | |

| | TECHNICAL FIELDS SEARCHED (IPC) |
|---|---|
| | G06Q |

The present search report has been drawn up for all claims

| Place of search | Date of completion of the search | Examiner |
|---|---|---|
| The Hague | 29 June 2023 | Streit, Stefan |

EPO FORM 1503 03.82 (P04C01)

## ANNEX TO THE EUROPEAN SEARCH REPORT
## ON EUROPEAN PATENT APPLICATION NO.

EP 23 16 9550

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2023

| Patent document cited in search report | | Publication date | Patent family member(s) | | Publication date |
|---|---|---|---|---|---|
| US 2020184538 | A1 | 11-06-2020 | US | 2015220836 A1 | 06-08-2015 |
| | | | US | 2020184538 A1 | 11-06-2020 |
| US 2014067596 | A1 | 06-03-2014 | US | 2014067596 A1 | 06-03-2014 |
| | | | WO | 2013126648 A1 | 29-08-2013 |
| US 2021192460 | A1 | 24-06-2021 | NONE | | |
| US 2018075104 | A1 | 15-03-2018 | US | 2018075104 A1 | 15-03-2018 |
| | | | US | 2020242111 A1 | 30-07-2020 |

EPO FORM P0459

For more details about this annex : see Official Journal of the European Patent Office, No. 12/82